# EUROPÄISCHE PATENTSCHRIFT

(11) **EP 0 686 271 B1**
(45) Veröffentlichungstag und Bekanntmachung des Hinweises auf die Patenterteilung: **19.03.1997**
(21) Anmeldenummer: 94908349.7
(22) Anmeldetag: 18.02.1994
(51) Int. Cl.: G02B 1/04, G02B 6/00

(54) **VERFAHREN ZUR VERRINGERUNG DER OPTISCHEN DÄMPFUNG EINES TRANSPARENTEN, TEILKRISTALLINEN FORMKÖRPERS**
PROCESS FOR REDUCING THE OPTICAL ATTENUATION OF A TRANSPARENT, PARTIALLY CRYSTALLINE MOLDED BODY
PROCEDE POUR LA DIMINUTION DE L'ATTENUATION OPTIQUE D'UN CORPS MOULE TRANSPARENT, PARTIELLEMENT CRISTALLIN

(30) Priorität: 26.02.1993 DE 4306058; 27.01.1994 DE 4402334
(43) Veröffentlichungstag der Anmeldung: 13.12.1995
(73) Patentinhaber: HOECHST AKTIENGESELLSCHAFT, 65926 Frankfurt am Main (DE)
(72) Erfinder: DITTMER, Thomas, D-84489 Burghausen (DE); DETTENMAIER, Manfred, D-55127 Mainz (DE); EICHHORN, Karsten, D-67585 Dorn-Dürkheim (DE); SINN, Christian, D-50969 Köln (DE)
(86) Internationale Anmeldenummer: EP9400479
(87) Internationale Veröffentlichungsnummer: WO9419719

(56) Entgegenhaltungen:
- EP-A- 0 246 613
- EP-A- 0 340 558
- EP-A- 0 488 390
- APPLIED PHYSICS LETTERS, Bd. 42, Nr. 7, 1. April 1983, New York, Seiten 567-569; T. KAINO et al.: 'Low loss poly(methylmethacrylate-d8) core optical fibers'
- PATENT ABSTRACTS OF JAPAN, vol. 11, no. 373 (P-643) 5. Dezember 1987; & JP-A-62 144 108
- PATENT ABSTRACTS OF JAPAN, vol. 16, no. 199 (P-1351) 13. Mai 1992; & JP-A-04 031 803
- PATENT ABSTRACTS OF JAPAN, vol. 13, no. 112 (P-844) 17. März 1989; & JP-A-63 287 910

## Beschreibung

Die Erfindung bezieht sich auf ein Verfahren zur Verringerung der optischen Dämpfung eines transparenten, teilkristallinen Formkörpers durch Verstrecken des Formkörpers entlang der Lichtausbreitungsrichtung. In einer besonderen Ausführungsform ist der Formkörper ein Lichtwellenleiter.

Es ist bekannt, daß sich die mechanischen Eigenschaften von Formkörpern, wie z.B. Fasern oder Folien, die aus Polymeren bestehen, durch Verstrecken verändern lassen.

Trotz einiger Fortschritte in den letzten Jahren sind die optischen Eigenschaften, insbesondere die optische Dämpfung, von transparenten, teilkristallinen Formkörpern, insbesondere von Lichtwellenleitern, immer noch verbesserungswürdig.

Lichtwellenleiter sind aus einem Kern und einem Mantel aufgebaut, die beide aus unterschiedlichen transparenten Materialien bestehen, wobei das Kernmaterial immer einen höheren Brechungsindex aufweist als das Mantelmaterial.

Die bisher für Lichtwellenleiter am häufigsten eingesetzten Materialien sind Homo- und Copolymere von Methacrylsäureestern im Kern und Homo- und Copolymere von Methacrylsäureestern fluorhaltiger Alkohole oder Copolymere des Vinylidenfluorids mit anderen fluorhaltigen Monomeren im Mantel (EP-A0-154 339, EP-A0-340 557, EP-A0-340 556, EP-A0-340 555, DE-C-24 55 265). Auch die Verwendung von Vinylidenfluorid-Copolymeren als Kernmaterial von Lichtwellenleitern ist bekannt (EP-A0-340 558).

Aufgabe der vorliegenden Erfindung war es, ein Verfahren bereitzustellen, daß es ermöglicht die optischen Eigenschaften eines transparenten, teilkristallinen Formkörpers, insbesondere eines Lichtwellenleiters, zu verbessern.

Die vorliegende Erfindung betrifft ein Verfahren zur Verringerung der optischen Dämpfung eines transparenten, teilkristallinen Formkörpers durch Verstrecken des Formkörpers in einer Richtung, so daß die optische Dämpfung in der Verstreckungsrichtung geringer wird. Hierbei kommt es sowohl parallel als auch senkrecht zur Verstreckungsrichtung zu einer Abnahme der optischen Dämpfung.

Bei dem erfindungsgemäßen Verfahren wird ein transparenter, teilkristalliner Formkörper bei einer Temperatur im Bereich von 40 bis 200°C entlang der Lichtausbreitungsrichtung verstreckt. Insbesondere liegt die Temperatur im Bereich von 60 bis 170°C, bevorzugt im Bereich von 80 bis 150°C.

Bei der Wahl des Temperaturbereiches sind die Schmelztemperatur des Materials aus dem der Formkörper besteht, die Verstreckgeschwindigkeit und die Verweilzeit in der Verstreckzone zu berücksichtigen.

Die Verstreckgeschwindigkeit liegt bei dem erfindungsgemäßen Verfahren üblicherweise im Bereich von 10⁻⁴ bis 20 m/min, bevorzugt im Bereich von 1 bis 16 m/min und besonders bevorzugt im Bereich von 3 bis 10 m/min.

Aufgrund des Zeit-Temperatur-Superpositionsprinzips besteht die Möglichkeit bei einer höheren Temperatur mit größerer Verstreckgeschwindigkeit zu verstrekken, während der Fachmann bei einer niedrigeren Temperatur eine geringere Verstreckgeschwindigkeit wählen würde. Bei der Wahl der Verstreckgeschwindigkeit sind ferner die Zugdehnungseigenschaften des Formkörpers bei der Verstrecktemperatur zu berücksichtigen. Die jeweilige Temperatur bzw. Verstreckgeschwindigkeit wird in Abhängigkeit vom Formkörpermaterial so gewählt, daß das Auftreten von Fehlstellen im Formkörper oder ein Abreißen desselben während des Verstreckvorganges vermieden wird.

Der Verstreckungsfaktor um den der transparente Formkörper verstreckt wird liegt bei dem vorliegenden Verfahren im Bereich von 1,5 bis 30. In einer bevorzugten Ausführungsform wird der Formkörper um einen Faktor 2 bis 20, insbesondere um einen Faktor im Bereich von 3 bis 10, gegenüber seiner Ausgangslänge verstreckt.

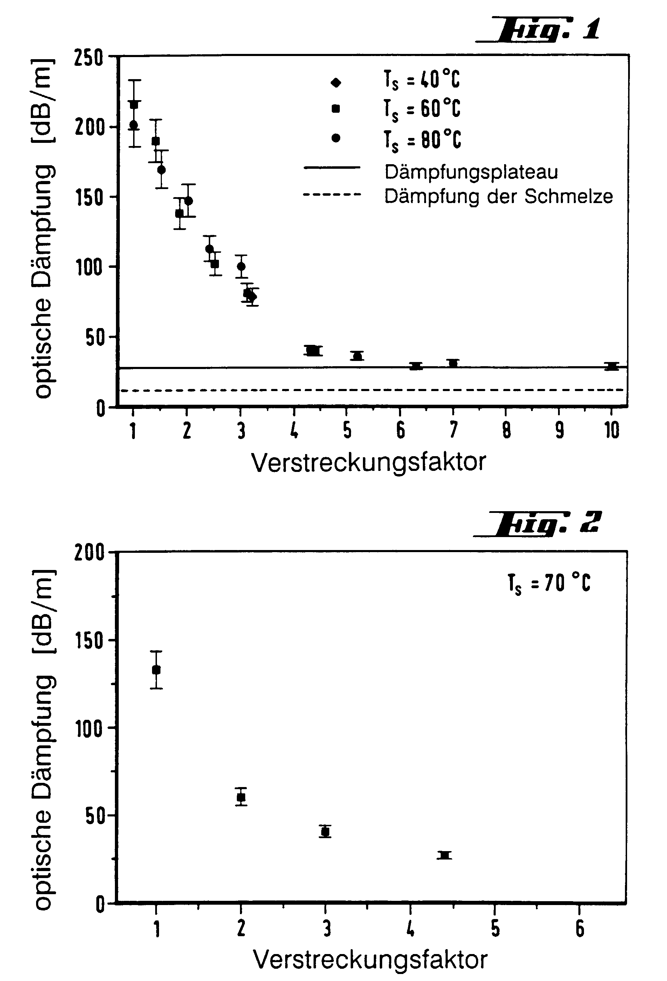

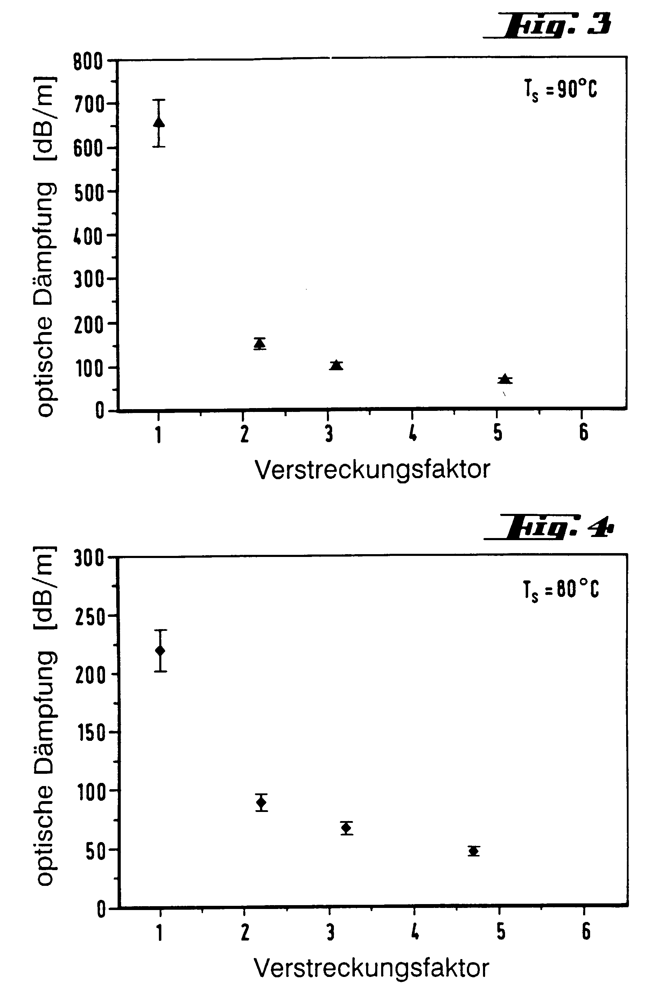

Die optische Dämpfung nimmt hierbei exponentiell mit steigendem Verstreckungsfaktor ab (siehe Abb. 1), so daß sich die optische Dämpfung ab einem gewissen Verstreckungsgrad (bzw. Verstreckungsfaktor) nicht mehr nennenswert verändert.

Voraussetzung für eine Erniedrigung der optischen Dämpfung ist, daß der teilkristalline Formkörper eine sphärolithische Struktur aufweist, deren Ordnung und Dimensionen durch den Verstreckprozeß beeinflußt werden, d.h. der Verstreckprozeß muß zu einer Deformation der ursprünglich vorhandenen Sphärolithe führen. Bei dem erfindungsgemäßen Verfahren kommt es dabei sowohl parallel als auch senkrecht zur Verstreckungsrichtung zu einer Abnahme der optischen Dämpfung. Strukturuntersuchungen mittels Kleinwinkellichtstreuung sowie Modellbetrachtungen zeigen, daß die physikalischen Ursachen in beiden Fällen völlig verschieden sind.

Der transparente, teilkristalline Formkörper kann aus verschiedenen Homo- und/-oder Copolymeren bestehen, die aus mindestens einem Monomeren aufgebaut sind, die aus der Stoffgruppe der Olefine und der (teil-)halogenierten Olefine stammen. Bevorzugt sind die Stoffgruppen der 1-Olefine, der (teil-)fluorierten und der (teil-)chlorierten Olefine. Besonders bevorzugte Monomere sind Tetrafluorethylen, Hexafluorpropen, Perfluorpropylvinylether, Vinylidenfluorid, Vinylfluorid, Chlortrifluorethylen, Vinylchlorid, Ethylen, Propylen, Isobutylen und Vinylacetat.

In einer bevorzugten Ausführungsform enthält der Formkörper zwei oder mehr Einheiten aus der Gruppe von Vinylidenfluorid (VdF), Tetrafluorethylen (TFE), Hexafluorpropylen (HFP) und Ethylen (ET). Bei Terpolymeren enthaltend Einheiten von VdF, TFE und HFP beträgt der Anteil an VdF vorzugsweise 20 bis 52 Gew.%, der TFE-Anteil vorzugsweise 25 bis 65 Gew.% und der HFP-Anteil vorzugsweise 15 bis 25 Gew%. Bei Formkörpern aus solchen Polymeren kann die optische Dämpfung bei einem Verstreckungsfaktor von 1,5 auf 90%, bezogen auf den Ausgangswert, bei einem Verstreckungsfaktor von 5 sogar bis auf 20%, bezogen auf den Ausgangswert, reduziert werden.

Besteht der Formkörper aus einem Copolymeren, das zu 50 bis 80 Gew.-% Einheiten von Tetrafluorethylen, 10 bis 25 Gew% Ethylen und 5 bis 40 Gew.-% Hexafluorpropen enthält, so verringert sich die optische Dämpfung bei einem Verstreckungsfaktor von 1,5 auf ca. 80%, bei einem Verstreckungsfaktor von 5 auf ca. 10%, bezogen auf den ursprünglichen Dämpfungswert.

In einer weiteren bevorzugten Ausführungsform enthält der zu verstreckende Formkörper 30 bis 60 Gew% Einheiten von Tetrafluorethylen, 20 bis 40 Gew% Vinylidenfluorid, 5 bis 20 Gew% Hexafluorpropylen und 5 bis 15 Gew% Ethylen.

Bei einem Copolymer enthaltend 65 bis 100 Gew% Einheiten von Vinylidenfluorid, 35 bis 0 Gew% Tetrafluorethylen und 20 bis 0 Gew% Hexafluorpropylen kann bei einem Verstreckungsfaktor von ca. 5 die optische Dämpfung um bis zu 5 %, bezogen auf den ursprünglichen Dämpfungswert, verringert werden.

Je nach Formkörpermaterial ist es möglich die optische Dämpfung um bis zu 95%, bezogen auf den Ausgangswert, zu erniedrigen.

Das Verstrecken ist auch als mehrstufiger Prozeß möglich, wobei die Temperatur der Probe und/oder die Verstreckgeschwindigkeit in den einzelnen Verstrekkungsstufen verschieden sein können. Auf diese Weise ist es möglich die optische Dämpfung bis auf einen Minimalwert zu reduzieren.

In einer bevorzugten Ausführungsform ist der transparente, teilkristalline Formkörper ein Lichtwellenleiter mit oder ohne Mantel, welcher entlang der Lichtausbreitungsrichtung verstreckt wird.

Der Lichtwellenleiter kann als planarer Lichtwellenleiter oder als Faser vorliegen. Insbesondere ist der transparente, teilkristalline Formkörper der Mantel eines Lichtwellenleiters, dessen Kern aus einem transparenten Material besteht, dessen Brechungsindex höher ist als der Brechungsindex des Mantelmaterials.

Die Erfindung wird durch die nachstehenden Beispiele näher erläutert.

### Beispiele

Ein Tercopolymer aus 52 Gew.-% Vinylidenfluorid, 36,5 Gew.-% Tetrafluorethylen und 11,5 Gew.-% Hexafluorpropylen wurde aus der Schmelze kristallisiert und auf Raumtemperatur abgekühlt.

Es wurden Proben mit einer Dicke von 4 mm und einer Breite von 5 mm hergestellt. Diese wurden in eine ®Instron Zugprüfmaschine (Firma Instron) mit einer Einspannlänge von 30 mm eingespannt und mit einer Verstreckgeschwindigkeit von 1,7 * 10⁻² mm/s verstreckt. Die Messungen wurden bei drei verschiedenen Temperaturen durchgeführt.

Vor und nach der Verstreckung um sukzessiv zunehmende Verstreckungsfaktoren wurde die optische Dämpfung des durch die Probe geführten Lichts gemessen (Transmissionsmessung bei der Wellenlänge 632nm, dann Umrechnung in die optische Dämpfung in dB/m). Der relative Fehler der Werte für die optische Dämpfung in den Tabellen 1, 2 und 3 beträgt 8%.

Die Meßwerte für die optische Dämpfung in Abhängigkeit vom Verstreckungsfaktor, die bei 40, 60 und 80°C ermittelt wurden, sind in Abb. 1 aufgetragen.

Soweit nicht anders angegeben gelten alle Angaben zur optischen Dämpfung parallel zur Verstreckungsrichtung.

**Tabelle 1:**

| Beispiel*) | Temperatur/°C | Verstreckungsfaktor | optische Dämpfung/dB*m⁻¹ |
|---|---|---|---|
| 1 | 60 | 1 (unverstreckt) | 215 |
| 2 | 80 | 1 (unverstreckt) | 202 |

| | | | |
|---|---|---|---|
| *) Die Beispiele 1 und 2 sind Vergleichsbeispiele. | | | |

**Tabelle 2:**

| Beispiel | Temperatur/°C | Verstreckungsfaktor | optische Dämpfung/dB*m⁻¹ |
|---|---|---|---|
| 3 | 40 | 3,2 | 78 |
| 4 | 60 | 1,4 | 190 |
| 5 | 60 | 1,8 | 138 |
| 6 | 60 | 2,5 | 102 |
| 7 | 60 | 3,1 | 81 |
| 8 | 60 | 4,4 | 40 |
| 9 | 60 | 6,3 | 29 |
| 10 | 80 | 1,5 | 170 |
| 11 | 80 | 2,0 | 147 |
| 12 | 80 | 2,4 | 112 |
| 13 | 80 | 3,0 | 100 |
| 14 | 80 | 4,3 | 40 |
| 15 | 80 | 5,2 | 36 |
| 16 | 80 | 7,0 | 31 |
| 17 | 80 | 10,0 | 29 |

### Beispiele 18 bis 22:

Copolymere verschiedener Zusammensetzung wurden bei unterschiedlichen Temperaturen verstreckt (Tₛ = Verstreckungstemperatur) und deren Dämpfung in Abhängigkeit von den Verstreckungsfaktoren gemessen.

**Tabelle 3:**

| Beispiel | Copolymerzusammensetzung (in Gew.%) | Verstreckungsfaktor | optische Dämpfung (dB/m) |
|---|---|---|---|
| 18 (Abb.2) | 24,1 VdF; 58,1 TFE; 17,8 HFP Tₛ = 70°C | 1^{#} | 133 |
| | | 2 | 60,4 |
| | | 3 | 40,4 |
| | | 4,4 | 27 |
| 19 (Abb.4) | 55,2 TFE; 29,9 HFP; 14,9 ET Tₛ= 80°C | 1^{#} | 220 |
| | | 2,2 | 89,3 |
| | | 3,2 | 67,1 |
| | | 4,4 | 47,3 |
| 20 (Abb.3) | 66,0 TFE; 18,2 HFP; 15,8 ET Tₛ = 90°C | 1^{#} | 655 |
| | | 2,2 | 151,5 |
| | | 3,1 | 101,2 |
| | | 5,1 | 66 |
| 21 | 100 VdF Tₛ = 165°C | 1^{#} | 21613 |
| | | 4,4 | 1800 |
| 22 | 69,4 VdF; 30,6 TFE Tₛ = 70°C | 1^{#} | 4250 |
| | | 5,6 | 164 |

| | | | |
|---|---|---|---|
| ^{#} = die Beispiele mit einem Verstreckungsfaktor 1 (= unverstreckter Formkörper) sind Vergleichsbeispiele. | | | |

## Patentansprüche

1. Verfahren zur Verringerung der optischen Dämpfung eines transparenten, teilkristallinen Formkörpers, dadurch gekennzeichnet, daß der transparente, teilkristalline Formkörper in einer Richtung so verstreckt wird, daß die optische Dämpfung in der Verstreckungsrichtung geringer wird.

2. Verfahren nach Anspruch 1, dadurch gekennzeichnet, daß der transparente, teilkristalline Formkörper ein Lichtwellenleiter ist.

3. Verfahren nach Anspruch 2, dadurch gekennzeichnet, daß der Lichtwellenleiter als planarer Lichtwellenleiter oder als Faser vorliegt.

4. Verfahren nach Anspruch 2, dadurch gekennzeichnet, daß der teilkristalline, transparente Formkörper der Mantel eines Lichtwellenleiters ist, dessen Kern aus einem transparenten Material besteht, dessen Brechungsindex höher ist als der Brechungsindex des Mantelmaterials.

5. Verfahren nach mindestens einem der Ansprüche 1 bis 4, dadurch gekennzeichnet, daß das Verstrecken bei einer Temperatur im Bereich von 40 bis 200°C durchgeführt wird.

6. Verfahren nach mindestens einem der Ansprüche 1 bis 5, dadurch gekennzeichnet, daß die Verstreckgeschwindigkeit im Bereich von 10⁻⁴ bis 20 m/min liegt.

7. Verfahren nach mindestens einem der Ansprüche 1 bis 6, dadurch gekennzeichnet, daß der Formkörper um einen Faktor im Bereich von 1,5 bis 30 gegenüber seiner Ausgangslänge verstreckt wird.

8. Verfahren nach mindestens einem der Ansprüche 1 bis 7, dadurch gekennzeichnet, daß der teilkristalline Formkörper eine sphärolithische Struktur aufweist, deren Ordnung und Dimensionen durch den Verstreckprozeß beeinflußt werden.

9. Verfahren nach mindestens einem der Ansprüche 1 bis 7, dadurch gekennzeichnet, daß der transparente, teilkristalline Formkörper aus Homo- und/oder Copolymeren besteht, die aus mindestens einem Monomeren aufgebaut sind, das aus den Stoffgruppen der Olefine und der (teil)halogenierten Olefine, insbesondere aus den Stoffgruppen der 1-Olefine, der (teil) fluorierten und (teil)chlorierten Olefine stammt.

10. Verfahren nach mindestens einem der Ansprüche 1 bis 9, dadurch gekennzeichnet, daß der Formkörper zwei oder mehr Einheiten aus der Gruppe von Vinylidenfluorid, Tetrafluorethylen, Hexafluorpropylen und Ethylen enthält.

11. Verfahren nach Anspruch 10, dadurch gekennzeichnet, daß der Formkörper aus einem Copolymer besteht, das zu 20 bis 52 Gew% Einheiten von Vinylidenfluorid, 25 bis 65 Gew% Tetrafluorethylen und 15 bis 25 Gew% Hexafluorpropylen enthält.

12. Verfahren nach Anspruch 10, dadurch gekennzeichnet, daß der Formkörper aus einem Copolymer besteht, das zu 50 bis 80 Gew% Einheiten von Tetrafluorethylen, 10 bis 25 Gew% Ethylen und 5 bis 40 Gew% Hexafluorpropylen enthält.

13. Verfahren nach Anspruch 10, dadurch gekennzeichnet, daß der Formkörper aus einem Copolymer besteht, das zu 30 bis 60 Gew% Einheiten von Tetrafluorethylen, 20 bis 40 Gew% Vinylidenfluorid, 5 bis 20 Gew% Hexafluorpropylen und 5 bis 15 Gew% Ethylen enthält.

14. Verfahren nach Anspruch 10, dadurch gekennzeichnet, daß der Formkörper aus einem Copolymer besteht, das zu 65 bis 100 Gew% Einheiten von Vinylidenfluorid, 35 bis 0 Gew% Tetrafluorethylen und 20 bis 0 Gew% Hexafluorpropylen enthält.

15. Verfahren nach mindestens einem der Ansprüche 1 bis 14, dadurch gekennzeichnet, daß das Verstrecken als mehrstufiger Prozeß erfolgt, wobei die Temperatur der Probe und/oder die Verstreckgeschwindigkeit bei den einzelnen Verstreckungsstufen verschieden sein können.

16. Formkörper hergestellt nach einem Verfahren gemäß mindestens einem der Ansprüche 1 bis 15.

## Claims

1. A process for reducing the optical attenuation of a transparent, partly crystalline shaped article, which comprises the transparent, partly crystalline shaped article being drawn in one direction such that the optical attenuation in the drawing direction becomes less.

2. The process as claimed in claim 1, wherein the transparent, partly crystalline shaped article is an optical waveguide.

3. The process as claimed in claim 2, wherein the optical waveguide is present as a planar optical waveguide or as a fiber.

4. The process as claimed in claim 2, wherein the partly crystalline, transparent shaped article is the cladding of an optical waveguide whose core comprises a transparent material whose refractive index is higher than the refractive index of the cladding material.

5. The process as claimed in at least one of claims 1 to 4, wherein the drawing is carried out at a temperature in the range of from 40 to 200°C.

6. The process as claimed in at least one of claims 1 to 5, wherein the drawing rate is in the range of from 10⁻⁴ to 20 m/min.

7. The process as claimed in at least one of claims 1 to 6, wherein the shaped article is drawn by a factor in the range of from 1.5 to 30 compared to its initial length.

8. The process as claimed in at least one of claims 1 to 7, wherein the partly crystalline shaped article has a spherulitic structure whose order and dimensions are affected by the drawing process.

9. The process as claimed in at least one of claims 1 to 7, wherein the transparent, partly crystalline shaped article comprises homo- and/or copolymers which are composed of at least one monomer which comes from the groups of substances consisting of the olefins and the (partly) halogenated olefins, in particular from the groups of substances consisting of the 1-olefins, the (partly) fluorinated and (partly) chlorinated olefins.

10. The process as claimed in at least one of claims 1 to 9, wherein the shaped article contains two or more units from the group consisting of vinylidene fluoride, tetrafluoroethylene, hexafluoropropylene and ethylene.

11. The process as claimed in claim 10, wherein the shaped article comprises a copolymer which contains from 20 to 52% by weight of units of vinylidene fluoride, from 25 to 65% by weight of tetrafluoroethylene and from 15 to 25% by weight of hexafluoropropylene.

12. The process as claimed in claim 10, wherein the shaped article comprises a copolymer which contains from 50 to 80% by weight of units of tetrafluoroethylene, from 10 to 25% by weight of ethylene and from 5 to 40% by weight of hexafluoropropylene.

13. The process as claimed in claim 10, wherein the shaped article comprises a copolymer which contains from 30 to 60% by weight of units of tetrafluoroethylene, from 20 to 40% by weight of vinylidene fluoride, from 5 to 20% by weight of hexafluoropropylene and from 5 to 15% by weight of ethylene.

14. The process as claimed in claim 10, wherein the shaped article comprises a copolymer which contains from 65 to 100% by weight of units of vinylidene fluoride, from 35 to 0% by weight of tetrafluoroethylene and from 20 to 0% by weight of hexafluoropropylene.

15. The process as claimed in at least one of claims 1 to 14, wherein the drawing is carried out as a multistage process, in which the temperature of the specimen and/or the drawing rate can be different at the individual drawing stages.

16. A shaped article manufactured according to a process as claimed in at least one of claims 1 to 15.

## Revendications

1. Procédé pour réduire l'atténuation optique d'un corps façonné, partiellement cristallin, transparent, caractérisé en ce que le corps façonné, partiellement cristallin, transparent, est étiré dans une direction de façon telle, que l'atténuation optique devienne plus faible dans le sens d'étirage.

2. Procédé selon la revendication 1, caractérisé en ce que le corps transparent, partiellement cristallin, est un guide d'ondes lumineuses.

3. Procédé selon la revendication 2, caractérisé en ce que le guide d'ondes lumineuses est présent sous forme d'un guide d'ondes lumineuses plan ou sous forme de fibres.

4. Procédé selon la revendication 2, caractérisé en ce que le corps façonné, transparent, partiellement cristallin, constitue de la gaine d'un guide d'ondes lumineuses, dont l'âme est constituée d'une matière transparente, dont l'indice de réfraction est supérieur à l'indice de réfraction de la matière de gaine.

5. Procédé selon au moins l'une des revendications 1 à 4, caractérisé en ce que l'on met en oeuvre l'étirage à une température dans l'intervalle de 40 à 200°C.

6. Procédé selon au moins l'une des revendications 1 à 5, caractérisé en ce que la vitesse d'étirage se trouve dans l'intervalle de 10⁻⁴ à 20 m/minute.

7. Procédé selon au moins l'une des revendications 1 à 6, caractérisé en ce que le corps façonné est étiré d'un facteur compris entre 1,5 et 30 par rapport à sa longueur de départ.

8. Procédé selon au moins l'une des revendications 1 à 7, caractérisé en ce que le corps façonné, partiellement cristallin, présente une structure sphérolithique dont l'ordre et les dimensions sont influencés par le procédé d'étirage.

9. Procédé selon au moins l'une des revendications 1 à 7, caractérisé en ce que le corps partiellement cristallin transparent est constitué d'homo- et/ou de copolymères qui sont édifiés d'au moins un monomère pris dans le groupe de matières oléfiniques et oléfiniques (partiellement) halogénées, plus particulièrement dans le groupe de matières des 1-oléfines, dérivant des oléfines (partiellement) fluorées et (partiellement) chlorées.

10. Procédé selon au moins l'une des revendications 1 à 9, caractérisé en ce que le corps façonné contient 2 ou plus de 2 motifs pris dans le groupe comportant le fluorure de vinylidène, le tétrafluoréthylène, l'hexafluoréthylène et l'éthylène.

11. Procédé selon la revendication 10, caractérisé en ce que le corps façonné est constitué d'un copolymère qui contient de 20 à 52 % en poids de motifs de fluorure de vinylidène, de 25 à 65 % en poids de tétrafluoréthylène et de 15 à 25 % en poids d'hexafluoropropylène.

12. Procédé selon la revendication 10, caractérisé en ce que le corps façonné est constitué d'un copolymère, contenant de 50 à 80 % en poids de motifs de tétrafluoréthylène, de 10 à 25 % en poids d'éthylène et de 5 à 40 % en poids d'hexafluoropropylène.

13. Procédé selon la revendication 10, caractérisé en ce que le corps façonné est constitué d'un copolymère contenant de 30 à 60 % en poids de motifs de tétrafluoréthylène, de 20 à 40 % en poids de fluorure de vinylidène, de 5 à 20 % en poids d'hexafluoropropylène et de 5 à 15 % en poids d'éthylène.

14. Procédé selon la revendication 10, caractérisé en ce que le corps façonné est constitué d'un copolymère contenant de 65 à 100 % en poids de motifs de fluorure de vinylidène, de 35 à 0 % en poids de tétrafluoréthylène et 20 à 0 % en poids d'hexafluoropropylène.

15. Procédé selon au moins l'une des revendications 1 à 14, caractérisé en ce que l'on effectue l'étirage dans un procédé à plusieurs étapes, la température de l'échantillon et/ou la vitesse d'étirage pouvant être différentes dans les différentes étapes d'étirage.

16. Corps façonné préparé selon un procédé selon au moins l'une des revendications 1 à 15.
